Europäisches Patentamt

European Patent Office

Office européen des brevets

(11) Publication number: **0 138 118**
**B1**

# EUROPEAN PATENT SPECIFICATION

(45) Date of publication of patent specification: 26.04.89

(51) Int. Cl.⁴: **C 02 F 3/12**, C 02 F 3/30, C 02 F 1/20

(21) Application number: **84111555.3**

(22) Date of filing: **27.09.84**

(54) Avoidance of rising sludge in biological wastewater treatment clarifiers.

(30) Priority: **29.09.83 US 537470**

(43) Date of publication of application:
**24.04.85 Bulletin 85/17**

(45) Publication of the grant of the patent:
**26.04.89 Bulletin 89/17**

(84) Designated Contracting States:
**AT BE CH DE FR GB IT LI LU NL SE**

(56) References cited:
**FR-A-2 257 327**

**SEWAGE WORKS JOURNAL, vol. 17, no. 6,
January-December 1945, pages 1191-1209,
Federation of Sewage Works Associations, US;
C.N. SAWYER et al.: "Rising of activated sludge
in final settling tanks"**

(73) Proprietor: **AIR PRODUCTS AND CHEMICALS,
INC.**
**Route no. 222**
**Trexlertown Pennsylvania 18087 (US)**

(72) Inventor: **Spector, Marshall Louis**
**1225 N. Marshall Street**
**Allentown, PA 18104 (US)**
Inventor: **Hong, Sun-Nan**
**4760 Parkview Drive**
**North Emmaus, PA 18049 (US)**
Inventor: **Seebohm, Robert Peter**
**2624 Sweetbriar Circle**
**Emmaus, PA 18049 (US)**

(74) Representative: **Sandmair, Kurt, Dr. Dr. et al**
**Patentanwälte Schwabe, Sandmair, Marx**
**Postfach 86 02 45 Stuntzstrasse 16**
**D-8000 München 86 (DE)**

Courier Press, Leamington Spa, England.

**Description**

Background of the invention

This invention relates generally to treatment of wastewater in systems employing recycled activated sludge.

The activated sludge process has been used for many years for the removal of biological oxygen demand (BOD) from wastewater. This process involves, in general, mixing the wastewater with recycled sludge containing microorganisms (biomass) and exposing the mixed liquor to aeration under conditions such that the biological oxygen demand of the wastewater is metabolized. Following such treatment, the mixed liquor is introduced into a settling tank, termed a secondary clarifier, in which the biomass settles out and concentrates while the clear liquor is discharged overhead for return to receiving streams or reservoirs, with or without further treatment. A major portion of the biomass which is concentrated and settled at the bottom of the clarifier, is recycled to the treating system for admixture with wastewater influent and a minor portion purged to maintain a constant biosolids inventory within the system.

The activated sludge process has been extensively described in the literature and several of its modifications are summarized in a special report on Wastewater Treatment by R. H. Marks in the June 1967 issue of POWER.

Among the problems encountered in operation of the activated sludge process was the difficulty, at times, in effecting desired separation of the biomass from the treated wastewater in the secondary clarifier. One of the reasons for the poor settling properties of the treated wastewater was found to be the proliferation of high surface area or filamentous species of microorganisms resulting in a phenomenon known as "bulking". Various modifications of the basic activated sludge process were proposed to overcome the bulking problem as described by Spector in the introductory paragraphs of U.S. Patent 4,056,465.

As stated in U.S. Patent 4,056,465, while certain of the methods theretofore proposed were effective in avoiding bulking biomass, they were not capable of doing so under conditions which also were effective in removal of nitrogen and/or phosphorus nutrient values from the wastewater influent. The method disclosed in this patent favors the selective production of nonbulking biomass while also obtaining effective removal of phosphates. By the proposed method of the patent, the wastewater and recycled sludge are initially admixed under anaerobic conditions in the substantial absence of oxygen or oxidizing agents and subsequently subjected to aeration followed by clarification. By a further alternative modification disclosed in the patent, nitrates and/or nitrites (NOX) are also removed by interposing an "anoxic" zone between the anaerobic zone and the aeration zone.

Thus, while the problems associated with bulking sludge have been largely overcome, there remains another major problem in sludge separation from biologically treated wastewater. This problem is the observed phenomenon of "rising sludge"; that is the ascent to the surface or upper regions of the secondary clarifier of sludge which had originally settled to the bottom of the clarifier. This phenomenon is different from the problem of filamentous sludge which does not settle adequately in the clarifier.

Rising sludge can occur in any activated sludge system but is particularly evident when the effluent from the aeration zone entering the clarifier, contains NOX, which is subsequently reduced to elemental nitrogen gas by the oxygen demand of the sludge at the bottom of the clarifier. When the concentration of dissolved nitrogen is in excess of that in equilibrium with nitrogen at the pressure existing in the sludge in the clarifier, excess nitrogen degasses; this results in formation of bubbles within the biomass and some or all of the settling biomass floats with the aid of gas bubbles to the top of the clarifier where it is discharged from the system with the effluent wastewater. This discharge of biomass results in excessive solids concentration in the treated water and diminished ability to maintain an inventory of biological solids within the system.

In "Sewage Works Journal", vol. 17, no. 6, January-December 1945, pages 1191—1209 is disclosed in the operation of an activated sludge system for treatment of wastewater wherein the mixed liquor comprising aerated water and sludge forming biomass is passed to a clarifier for settling the sludge therein the method of inhibiting rising of the settled sludge in the clarifier which comprises exposing the mixed liquor, prior to admission into the clarifier, to conditions such that the concentration of dissolved nitrogen therein does not exceed that in equilibrium with nitrogen at the pressure prevailing in the settling biomass and the biomass blanked in the clarifier.

The influence of nitrogen introduced into the wastewater during discharge from an aeration tank to a settling tank is not taken into consideration in the above document.

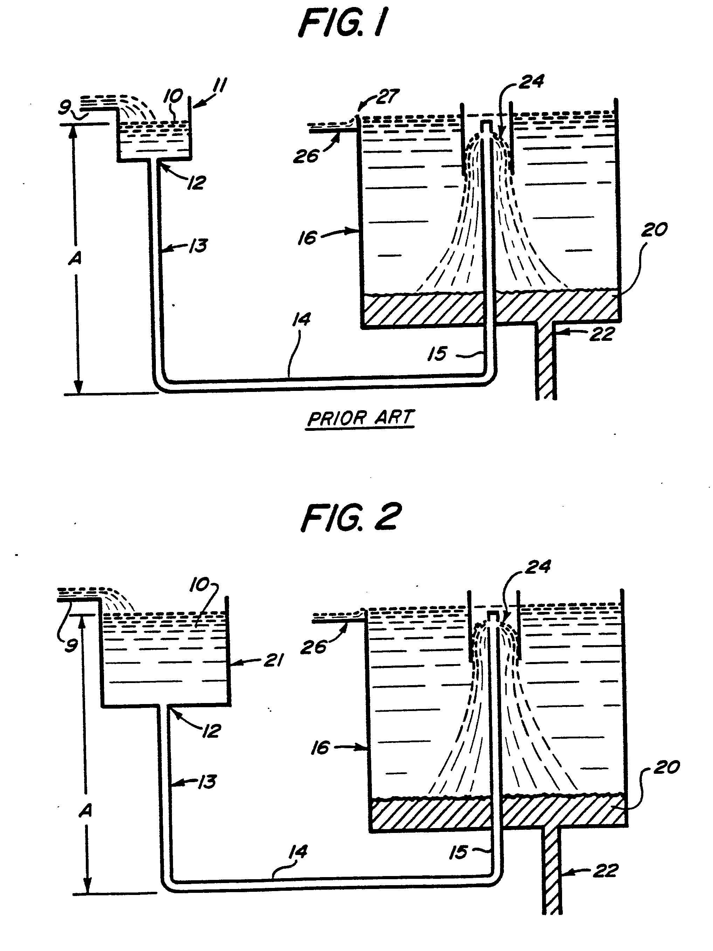

There are a variety of designs for clarifiers and for the introduction of mixed liquor to these clarifiers. In a typical system the mixed liquor from the aeration zone is discharged into an open channel or trough through which it flows and discharges into a receiving basin or so-called "effluent pit". The mixed liquor is withdrawn from the bottom of the pit through an effluent pipe, flowing downwardly for some distance through the pipe then laterally to an upwardly directed leg extending from the end of the lateral leg of the pipe through the bottom of the clarifier to a discharge level near the top of the clarifier. By the described arrangement, the height of the liquid in the clarifier is substantially the same as that in the effluent pit. This conventional arrangement is illustrated in Figure 1 of the accompanying drawings. Certain of these

EP 0 138 118 B1

systems also provide means to aerate the mixed liquor, via air sparging, during passage from the aeration zone to the effluent pit and in the effluent pit itself.

In an investigative study undertaken to determine the cause for the rising of bubbles in the clarifier the conditions for exposing the mixed liquor, prior to admission into the clarifier have been determined and include minimization or elimination of macrobubbles from the mixed liquor and subjecting the liquor substantially free of macrobubbles to hydraulic pressure effective to promote dissolution of contained microbubbles.

## Summary of the invention

In accordance with the present invention the major cause of rising bubbles in the clarifier is minimized or eliminated. It was found that these bubbles at least in part resulted from the dissolution of nitrogen from the air entrained in the mixed liquor during transport from the aeration basin to the clarifier. These entrained air bubbles, from which the oxygen is depleted by satisfaction of biological oxygen demand, are compressed as the mixed liquor descends through the hydraulic pressure zone defined as the column of liquid extending from surface level of the liquid in the effluent pit to the bottom of the descending effluent pipe.

In accordance with the present invention hydraulic compression is utilized effectively to dissolve the micro-bubbles (i.e., those of less than about 0.02 inches (0.51 mm) in diameter) while the entrainment of larger gas bubbles, termed macrobubbles, is avoided by designing the dimensions of the effluent pit such that the downward flow rate of mixed liquor in the pit is exceeded by the upward rate of rise of macrobubbles, thus eliminating such macrobubbles from the system.

## Brief description of the drawings

In the accompanying drawings;

Figure 1 is a simplified schematic flow diagram of a typical prior art system for the transfer of treated mixed liquor from the aeration basis (not shown) to the secondary clarifier;

Figure 2 is a simplified schematic flow diagram of an improved system in accordance with a preferred embodiment of the invention;

Figure 3 is a simplified schematic flow diagram of an alternative embodiment for practice of the invention.

Figure 4 is a graph showing bubble rise velocity as a function of bubble diameter.

## Detailed description

Figure 1 illustrates a typical prior art system for transfer of mixed liquor from the aeration basin (not shown) to the secondary clarifier. The liquor leaves the aeration basin through a trough or channel 9 which discharges the mixed liquor 10 into the effluent pit 11. Mixed liquor is withdrawn from the pit through a discharge opening 12 at the bottom thereof into descending transfer pipe 13. The liquor is transferred from pit 11 into clarifier 16 through the vertical downflow leg of pipe 13, passing via the lateral extension 14 of the pipe into the ascending leg 15 which passes upwardly through the bottom of clarifier 16 to a discharge level near the top of the clarifier. A concentric open cylindrical pipe surrounds the upper portion of leg 15 to provide a stilling well 24 for the discharging liquor. The denser sludge settles to the bottom of clarifier 16 forming a sludge layer 20 which is withdrawn through a conduit 22 at or near the bottom of the clarifier, a portion of which sludge is recycled to the treating system for admixture with the wastewater influent. The clarified overhead liquor overflows to discharge 26 at the weir 27.

The level of the mixed liquor 10 in pit 11 is determined by the level of overflow weir 27 and the flow resistance in transfer pipe 13. The vertical distance from the surface of the mixed liquor in pit 11 to the lowest point of pipe 13 defines the magnitude of the hydraulic head of compression designated by the letter A in the drawings.

The mixed liquor of a conventional transfer system, such as is illustrated in Figure 1, which enters the effluent pit 11 contains gas which becomes entrained in the liquor by turbulent air-water mixing as the liquor falls from the bottom of channel 9 to the level of the liquid surface in pit 11. The liquid in effluent pit 11 is typically less than 1.22 m (4 feet) deep and/or the bulk liquor descent rate is high, say at a velocity in excess of 0.122 m (0.4 feet) per second. At this high velocity, it was observed that, relative to the volume of mixed liquor, more than 1% by volume of the gas enters the mouth of transfer pipe 13, in which pipe the descending linear velocity of the liquid is sufficiently high to prevent separation of entrained gas from the mixed liquor. In some plants, moreover, air is sparged into the effluent channel 9 and/or into the effluent pit 11, which results in an even greater volume of entrained gas contained in the liquor entering pipe 13. Since the biological oxygen demand of the mixed liquor depletes the oxygen content of the dissolved air, the entrained gas is composed largely of nitrogen, which is dissolved in the liquor to the extent of about 18 parts per million (ppm) by weight at 25°C at a nitrogen pressure of one atmosphere. The mixed liquor is typically compressed an additional half atmosphere during passage through a compression zone (A) of about 17 feet (5.18 m) of water or to about 7.4 psig (1.51 bar) during passage to the secondary clarifier. As a result of such compression, the dissolved nitrogen concentration is increased from about 18 ppm by weight at a nitrogen pressure of one atmosphere to about 27 ppm at a nitrogen pressure of about one and a half atmospheres. The volume of gaseous nitrogen required to increase the dissolved nitrogen

3

concentration in the mixed liquor from 18 to 27 ppm is about 7 cubic centimeters per liter of mixed liquor, which amount is present when the entrained nitrogen in the mixed liquor is equal to or greater than about 0.7 volume percent. In a particular plant where the problem of rising sludge was observed, samples of the mixed liquor from the descending liquor zone of the effluent pit were at time found to have an entrained gas volume in excess of 20%.

Where the dissolved nitrogen content of the mixed liquor is greater than that in equilibrium with nitrogen at a given clarifier depth, the liquor is supersaturated and nitrogen can degas to form nitrogen bubbles. The requisite concentration of dissolved nitrogen necessary to produce a gas bubble at a given clarifier depth is shown in Table 1 below.

TABLE 1

Equilibrium dissolved nitrogen in
clarifier as a function of clarifier
depth at 25°C

| Clarifier depth | | ppm (wt) Dissolved nitrogen needed to produce a gas bubble |
| --- | --- | --- |
| Feet of water | (m) | |
| 0 (surface) | 0 | >14.4 equilibrium with 80% $N_2$ in air |
| 5 | 1.52 | >20.6 equilibrium with 100% $N_2$ |
| 10 | 3.05 | >23.2 equilibrium with 100% $N_2$ |
| 15 | 4.57 | >25.9 equilibrium with 100% $N_2$ |
| 20 | 6.1 | >28.5 equilibrium with 100% $N_2$ |
| 25 | 7.62 | >31.2 equilibrium with 100% $N_2$ |
| 30 | 9.15 | >33.8 equilibrium with 100% $N_2$ |

Table 2, below, shows the tolerance for nitrogen release at 25°C in the secondary clarifier receiving mixed liquor saturated with atmospheric nitrogen in order to avoid nitrogen bubble formation. In column a of the table, there is shown the amount of nitrogen (ppm) present at different depths in a 14-foot (4.27 m) standard clarifier in mixed liquor containing no entrained air at the point of entry to pipe 13. Column b shows the corresponding maximum concentration of nitrogen at the same depths in the case of saturation with 100% nitrogen gas, such that no outgassing of nitrogen will occur. Column c shows the maximum increase in dissolved nitrogen that can be tolerated before bubble formation can take place (column b minus column a). As seen from the table, 3.4 to 10.8 parts per million of nitrogen production may be tolerated in a 14-foot (4.27 m) deep clarifier. In the event that the aeration compression effect is exerted to the maximum, there would be a tolerance of only about 3 ppm rather than the theoretical 10.8 ppm shown in column c of the table. In reality, the upper portion of the system of column b will be in equilibrium with air, and the real tolerance will be less than that indicated in column c.

4

EP 0 138 118 B1

TABLE 2

| a<br>In equilibrium<br>with air (80% N₂)<br>at surface<br>(ppm N₂) | Depth<br>(Feet) | (m) | b<br>In equilibrium<br>with 100% N₂<br>at depth<br>(ppm N₂) | c<br>Differential<br>b minus a<br>(ppm N₂) |
|---|---|---|---|---|
| 14.5 | 0 | 0 | 17.9 | 3.4 |
| 14.5 | 4 | 1.22 | 20.1 | 5.6 |
| 14.5 | 8 | 2.44 | 22.2 | 7.7 |
| 14.5 | 11 | 3.55 | 24.3 | 9.8 |
| 14.5 | 14 | 4.27 | 25.3 | 10.8 |

When the liquor depth of the conventional clarifier 16 is 10 feet (3.05 m) and 27 ppm nitrogen are dissolved in the bulk liquor, there will be a tendency for gaseous nitrogen bubbles to form since 27 ppm of dissolved nitrogen are greater than the 23.2 parts per million needed to produce a gas bubble at a depth of ten feet (3.05 m) (see Table 1). In addition, in those cases where NOX is present, additional nitrogen is produced, which serves to form more and/or larger bubbles. This increases the flotation potential and aggravates the rising sludge problem.

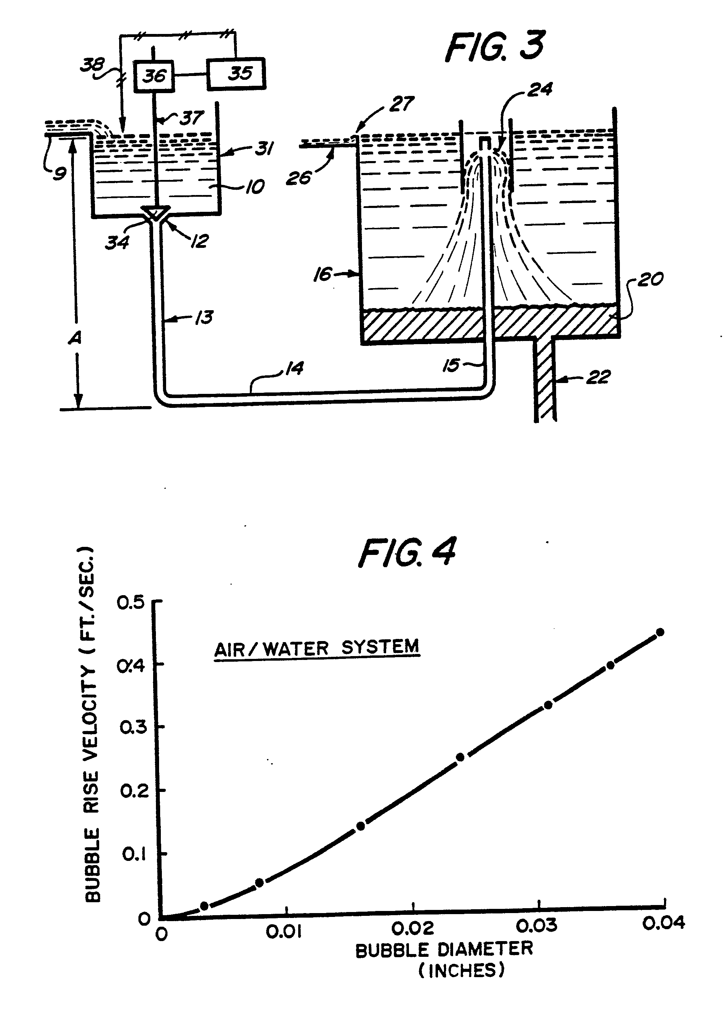

It will be seen by reference to the graph in Figure 4 that the velocity at which bubbles rise in an air-water system is dependent upon the size of the bubbles. Microbubbles, defined as those having a diameter of up to about 0.02 inches (0.51 mm), will rise at a rate of less than about 0.2 feet (6.1 cm) per second. As the bubble diameter is increased to 0.04 inches, (1.02 mm) the bubble rise velocity exceeds 0.4 feet (12.2 cm) per second.

It has been found that the passage of mixed liquor containing entrained small bubbles through the hydraulic compression zone enroute to the clarifier results in dissolution of nitrogen from the entrained bubbles since these small bubbles cannot rise through the zone at sufficient velocity to surpass the descent rate of the mixed liquor. Thus, the entrained excess nitrogen can degas within the clarifier forming larger bubbles giving rise to the sludge flotation problem.

It was unexpectedly found, however, that the passage of mixed liquor through a hydraulic compression zone in the absence of excessive entrainment of gas is beneficial. Without being bound to any particular explanation, it is believed that the compression dissolves the microbubbles which serve as nuclei to promote the rate of desupersaturation of dissolved nitrogen. This factor is taken advantage of in accordance with the present invention wherein hydraulic compression is utilized in order to dissolve the microbubbles, such as those of less than 0.02 inches (0.51 mm) in diameter, while the entrainment of larger gas bubbles is avoided, as is explained below. The present invention solves the rising sludge problem by minimizing or eliminating macrobubbles from the mixed liquor discharged into the clarifier and by utilizing the hydraulic pressure in zone A to effect the dissolution of the microbubbles.

In accordance with a preferred embodiment of the invention, the mixed liquor effluent pit is designed of such width and depth that the downward flow rate of the mixed liquor in the pit is exceeded by the upward rate of rise of the macrobubbles, thereby eliminating macrobubbles from the system while microbubbles are dissolved as a result of the hydraulic pressure imposed in the downcomer conduit from the pit.

A practical application of the principle of the invention is illustrated in Figure 2 wherein like parts are numbered as in Figure 1.

As seen in Figure 2, effluent pit 21, receiving the mixed liquor from channel 9 is made wider and deeper than the conventional effluent pit shown in Figure 1. The depth of the descending liquor in pit 21 is greater than four feet (1.22 m) and the downward velocity of the descending liquor therein above the entrance to the transfer pipe 13 is maintained at less than 0.4 feet (12.2 cm) per second, preferably less than 0.2 feet (6.1 cm) per second, by enlarging the horizontal area of the pit. This combination serves to reduce the amount of entrained gas in the mixed liquor at the point of entry 12 to the effluent pipe to less than about 0.4 volume percent, as opposed to that prevailing in conventional design wherein more than one volume percent of gas is entrained in the liquor entering the mouth of the transfer pipe.

In the embodiment illustrated in Figure 2, the depth of the descending liquor in effluent pit 21 is increased to about 10 feet (3.05 m) or more, which allows time for small bubbles to coalesce and for macrobubbles to escape prior to their entering the inlet 12 of pipe 13, in which pipe the linear velocity of the descending liquor accelerates to greater than a foot (0.305 m) per second and there is no further opportunity for the bubbles to escape.

A critical parameter in the design of the effluent pit is to assure that the horizontal area is adequate to

5

obtain a velocity therein of the descending liquor of less than 0.4 feet (12.2 cm) per second. This descending velocity, as shown in Figure 4, is less than the rise velocity of the macrobubbles. Calculation of the area of the effluent pit to achieve a given liquor descent velocity is a function of the flow rate of mixed liquor discharging into the pit. Table 3 below shows the descent rate of liquor in the pit as a function of its horizontal area, based on a given mixed liquor flow of 10 million gallons (37854 m³) per day. The values shown in the table can be used to calculate horizontal areas of effluent pits for other flow rates. For instance, when the mixed liquor flow rate is halved to 5 million gallons (18927 m³) per day, all of the reported descent rate values of Table 3 are halved.

TABLE 3

Descent rate of mixed liquor at a flow of
10 million gallons per day as a function of
the horizontal area of the effluent pit

| Horizontal area of effluent pit, | | Descent rate, | |
| Square feet | (m²) | Feet per second | (m/s) |
| --- | --- | --- | --- |
| 5 | 0.465 | 3.1 | 0.945 |
| 10 | 0.929 | 1.5 | 0.457 |
| 15 | 1.394 | 1.0 | 0.305 |
| 20 | 1.858 | .77 | 0.235 |
| 25 | 2.323 | .62 | 0.189 |
| 30 | 2.787 | .52 | 0.158 |
| 35 | 3.252 | .44 | 0.134 |
| 40 | 3.716 | .39 | 0.119 |
| 45 | 4.181 | .34 | 0.104 |
| 50 | 4.645 | .30 | 0.091 |
| 60 | 5.574 | .25 | 0.076 |
| 70 | 6.503 | .22 | 0.067 |

Referring again to the Figure 2 embodiment, the low point in the effluent pipe 13 is designed such that the depth of the hydraulic compression zone A—17 feet (5.18 m) in this case—is greater than the liquid level in the clarifier 16, which provides compression of about half an atmosphere. This compression is adequate to effect dissolution of most or all of the microbubbles in the compression zone and in effluent pipe 13 during transfer of mixed liquor to the clarifier.

The beneficial effects of the elimination of microbubbles are:

(1) to minimize or eliminate the rising of pin point floc attached to the microbubbles. The rate of dissolution of microbubbles is also a function of the duration time that the mixed liquor is held under pressure. It has been observed that a duration time of 15 seconds is adequate.

(2) to minimize or eliminate microbubbles, which would otherwise serve as nuclei which promote degassing of liquor supersaturated with nitrogen; and

(3) to increase the density of sludge in compaction of the sludge blanket in the clarifier;

It must be emphasized that the beneficial effects of compression, as hereinbefore indicated, are obtained only in the substantial absence of macrobubbles; the elimination or minimization of such macrobubbles being attained in accordance with the teachings of the present invention. Adverse effects produced by the combination of excessive nitrogen entrainment and hydraulic compression are:

(1) dissolution of excessive nitrogen which degasses in the clarifier and results in rising sludge; and

(2) inability to dissolve microbubbles because dissolution of excess gas from macrobubbles causes the mixed liquor to become saturated with nitrogen thus preventing dissolution or microbubbles.

Figure 3 illustrates an alternative embodiment for practice of the invention. In this embodiment, macrobubbles are removed in the effluent channel and turbulent transfer of mixed liquor to the effluent pit is minimized to the point that little or no air is mixed and entrained with the liquor. As seen in Figure 3 and compared to the conventional design illustrated in Figure 1, the height of liquid surface in effluent pit 31 is raised so that the vertical distance of the drop of mixed liquor from trough 9 into the effluent pit is considerably reduced, thus avoiding excessive turbulence and re-entrainment of air into the mixed liquor.

To minimize the extent of air entrainment, the vertical drop of liquor from channel 9 to the level of the liquor in pit 31 should be less than 18 inches 45.72 cm and preferably less than about 6 inches (15.24 cm). In conventional installations, such as that illustrated in Figure 1, the uncontrolled drop is generally greater than about 24 inches (60.96 cm).

In the embodiment illustrated in Figure 3, the vertical distance of the drop from channel 9 into pit 31 is controlled by regulating the level of the liquid in the pit; the liquid level in the effluent channel does not vary by more than a few inches from a mean.

Control of the liquid level in the effluent pit 31 (Figure 3) is had by means of a flow restrictor 34 at the entry mouth 12 of pipe 13. By raising and lowering flow restrictor 34, the rate of flow of liquid into pipe 13 is regulated and, in turn, the differential between the liquid level in effluent channel 9 and the surface level of the mixed liquor in pit 31 controlled.

The raising and lowering of flow restrictor 34 can be effected, as shown, by a drive motor 35 which is mechanically coupled to a gear box 36 arranged to raise and lower shaft 37 attached to flow restrictor 34. A level sensing device 38 determines the existing level of the surface of liquid in pit 31 and is operatively connected to means for actuating motor 35 and its direction of rotation. When the liquid level in pit 31 is too low, sensor 38 actuates motor 35 to rotate in a direction to lower shaft 37, thereby further restricting liquid discharge into pipe 13 and causing the level of liquid in pit 31 to rise. When the surface of the liquid in the pit is too high, the sensor 38 actuates motor 35 to rotate in a direction causing shaft 37 to rise, thereby opening the constriction between 34 and the mouth 12 of pipe 13 to permit a higher flow rate of liquid into the pipe, thereby lowering the level of liquid in pit 31.

In the embodiment shown in Figure 3, macrobubbles formed from air entrained in the last stage of the aeration zone are allowed to escape from the mixed liquor in the effluent channel 9 prior to admission to the effluent pit 31. In this case, neither the depth of the descending liquor in the pit nor the rate of descent is critical. However, conditions in effluent channel 9 must be maintained such as to assure that macrobubbles are allowed sufficient time to rise and that additional macrobubbles are not introduced. This is achieved by maintaining a residence time in the effluent channel of at least about a minute, and further by limiting the vertical drop from the channel 9 to the effluent pit as explained above. Also, the use in the effluent channel or in the effluent pit of means to aeration, such as by air sparging, are to be avoided.

The embodiment depicted in Figure 3 utilizes a compression zone to eliminate microbubbles under the same conditions as described with respect to the Figure 2 embodiment. The several features of both embodiments may be combined in a single system in order to assure maximum removal of macrobubbles before the mixed liquor undergoes hydraulic compression.

A series of experiments were carried out in the laboratory to demonstrate the principles of the invention.

Example 1

The beneficial effect of hydrostatic pressure imposed on the mixed liquor in the substantial absence of macrobubbles therein was demonstrated using an actual sample of mixed liquor from the effluent channel of an operating plant.

The sample was divided into identical cylinders, each 14 inches (35.56 cm) deep and the liquor was allowed to outgas for 60 seconds in order to allow macrobubbles, which were entrapped during the filling of the cylinders, to escape. The mixed liquor contained about 3,000 ppm solids and had an initial NOX concentration of 3.3 ppm by weight, expressed as nitrogen.

One cylinder was subjected to a static pressure of 7.5 psig (1.52 bar) by application of nitrogen pressure thereon without sparging and the other cylinder was left alone. Both samples exhibited reduction of the sludge blanket to about 40% of the original height after 15 minutes standing. Sludge in the unpressured sample started to rise after 20 minutes and had wholly risen to the surface in 47 minutes.

The pressured sample exhibited reduction of the sludge blanket to 28% of the original height after 47 minutes and was free of rising sludge. The same pressured sample exhibited further reduction of the sludge blanket to 25.5% of the original height and no sludge had risen after 16 hours.

The foregoing example demonstrates the beneficial effect of compression on avoiding rising sludge and on improving compaction of the sludge layer.

Example 2

In another experiment on mixed liquor from the same plant as in Example 1, the samples were placed in identical cylinders of 14 inch (35.56 cm) depth. Each of the samples were sparged with gas at a rate sufficient to expand the liquor volume by more than one percent. One was sparged with nitrogen gas at 7.3 psig (1.5 bar) and the other with nitrogen gas at atmospheric pressure for ten minutes, after which the sparging in both cylinders was stopped and the pressure on the pressurized cylinder was reduced to atmospheric. The sludge in the cylinder which had been sparged under pressure settled to about 85% of its original height and began to rise after two minutes standing, completely rising to the surface in five minutes. The sludge which was sparged at atmospheric pressure settled to 60% of its original height on five minutes standing; after 15 minutes the sludge was at 40% of its original height and was free of rising sludge.

Example 3

The two mixed liquor samples were placed in cylinders as in the previous Example 2. One sample was sparged with nitrogen gas at 3.1 psig (1.21 bar) and the other with nitrogen gas at atmospheric pressure for ten minutes, after which time sparging was discontinued and the pressurized cylinder reduced to atmospheric. The sludge in the cylinder which had been sparged under pressure settled to about 70% of its original height at ten minutes, after which time sludge began to rise; by thirty minutes 90% of the sludge had risen to the top. The sludge in the mixed liquor which had been sparged at atmospheric pressure settled to 23% of its original height in eleven minutes; in thirty minutes it was at 22% of original height and showed no signs of sludge rising.

Examples 2 and 3 demonstrate the detrimental effect of superatmospheric nitrogen pressure on mixed liquor containing a gas volume in excess of one percent. Under superatmospheric pressure the liquor was supersaturated with nitrogen, which outgassed at atmospheric pressure and the resulting bubbles of nitrogen served to float sludge to the top.

The invention is applicable to any activated sludge system in which the problem of sludge rising in the secondary clarifier is potentially present. The problem of sludge rising is particularly prevalent in systems in which the effluent from the aeration zone which is introduced into the clarifier, contains NOX, which is subsequentaly reduced to elemental nitrogen by the oxygen demand of the sludge at the bottom of the clarifier. The invention is equally applicable to such activated sludge systems employing atmospheric air as well as to systems employing oxygen-containing gas of higher oxygen concentration.

**Claims**

1. A method for the operation of an activated sludge system for treatment of wastewater wherein the mixed liquor comprising aerated wastewater and sludge-forming biomass is passed to a clarifier for settling the sludge therein, and wherein rising of the settled sludge in the clarifier is inhibited by exposing the mixed liquor, prior to admission into the clarifier, to conditions such that the concentration of dissolved nitrogen therein does not exceed that in equilibrium with nitrogen at the pressure prevailing in the settling biomass and the biomass blanket in the clarifier, characterized in that the recited conditions include minimization or elimination of macrobubbles from the mixed liquor and subjecting the liquor substantially free of macrobubbles to hydraulic pressure effective to promote dissolution of contained microbubbles, prior to introducing the mixed liquor into the clarifier.

2. The method as defined in Claim 1 wherein said mixed liquor contains NOX.

3. The method as defined in Claim 1 wherein the aerated mixed liquor during transfer from areation to clarification is maintained in an effluent basin open to the atmosphere, said basin being of such area and depth that the downward flow rate of the mixed liquor therein is exceeded by the upward rate of rise of contained macrobubbles, thereby eliminating such macrobubbles prior to subjecting the mixed liquor to hydraulic compression.

4. The method as defined in Claim 3 wherein said hydraulic pressure is that resulting from withdrawal of the mixed liquor from the bottom of said basin through a downwardly extending conduit leading from said basin and discharging into said clarifier.

5. The method as defined in Claim 3 wherein the area of said effluent basin is such that the rate of descent of the mixed liquor therein is less than 0.4 feet (0.122 m) per second and the liquid depth in said basin is greater than four feet (1.22 m) above the inlet to the conduit through which the contained liquor is discharged from said basin.

6. The method as defined in Claim 5 wherein the depth of liquid in said effluent basin is at least about 10 feet (3.05 m).

7. The method as defined in Claim 2 wherein the concentration of bubbles is reduced to less than about 0.7 volume percent before subjecting the liquor to hydraulic compression, and wherein such subsequent hydraulic compression is under conditions corresponding to about 1.5 bar (7.3 psig) for at least 15 seconds.

8. The method as defined in Claim 2 wherein the concentration of bubbles is reduced to less than about 0.3 volume percent before subjecting the liquor to hydraulic compression, and wherein such subsequent hydraulic compression is under conditions corresponding to about 1.5 bar (7.3 psig) for at least 15 seconds.

9. The method as defined in Claim 8 wherein said mixed liquor contains NOX.

10. The method as defined in Claim 2 wherein the content of macrobubbles in said aerated mixed liquor is minimized or eliminated by permitting such macrobubbles to degas in a channel open to the atmosphere, said channel discharging into an effluent basin, maintaining conditions during discharge of the mixed liquor from said channel to said basin such as to avoid reentrainment of air into the mixed liquor, and maintaining a residence time of the liquor in said channel of at least one minute.

11. The method as defined in Claim 10 wherein the conditions under which mixed liquor is discharged from the channel to the basin include a controlled vertical drop of less than about 45.72 cm (18 inches).

12. The method as defined in Claim 11 wherein said vertical drop is less than about 15.24 cm (6 inches).

13. The method as defined in Claim 11 wherein the control of the height of the vertical drop is effected by adjusting the level of liquid in the effluent basin.

14. The method as defined in Claim 13 wherein the adjustment of the level is effected by controlling the rate of discharge of liquid from the bottom of said basin through flow restricting means automatically responsive to level sensing means in said basin.

15. The method as defined in Claim 2 wherein the minimization or elimination of macrobubbles is effected by permitting such macrobubbles to degas in a channel open to the atmosphere, said channel discharging into an effluent basin through a controlled vertical drop of less than about 45.72 cm (18 inches), said basin being of such area and depth that the downward flow rate of mixed liquor therein towards a discharge outlet is exceeded by the upward rate of rise of contained macrobubbles.

16. The method as defined in Claim 15 wherein said mixed liquor contains nitrates and/or nitrites.

17. The method as defined in Claim 15 wherein the residence time of the flowing mixed liquor in said channel is at least one minute.

18. Transferring means in an activated sludge system for treatment of wastewater having an aeration zone for oxidation of mixed liquor comprised of wastewater and recycled sludge, for transferring the aerated mixed liquor from said areation zone to a clarifier wherein the sludge is settled, said transferring means comprising an open channel receiving mixed liquor from said aeration zone, an effluent pit into which said channel discharges, a transfer pipe extending downwardly from the bottom of the pit, then laterally and upwardly through the bottom of the clarifier and discharging mixed liquor into said clarifier, the improvement which comprises dimensioning the area and depth of said pit above the inlet of said transfer pipe, such that the rate of descent of mixed liquor therein is less than 0.4 feet (0.122 m) per second and the depth of liquor in said pit is greater than four feet (1.22 m), thereby enabling the degassing of entrained gas bubbles from said mixed liquor before its discharge into said pipe.

19. The method as defined in Claim 18 wherein said mixed liquor contains NOX.

20. The improvement as defined in Claim 18 wherein the depth of liquor in said pit is at least about 3.05 m (ten feet).

## Patentansprüche

1. Verfahren für den Betrieb eines aktivierten Schlammsystems für die Behandlung von Abwasser, bei dem die gemischte, belüftetes Abwasser und Schlamm bildende Biomasse enthaltende Flüssigkeit in ein Klärbecken geleitet wird zum Absetzen des Schlammes darin, und bei dem ein Aufsteigen des abgesetzten Schlammes im Klärbecken verhindert wird durch Aussetzen der gemischten Flüssigkeit vor Eintritt in das Klärbecken gegenüber derartigen Bedingungen, daß die Konzentration an darin gelöstem Stickstoff nicht diejenige im Gleichgewicht mit Stickstoff übersteigt, bei einem Druck, der in der absetzenden Biomasse und der Biomassedecke im Klärbecken vorherrscht, dadurch gekennzeichnet, daß die vorstehend genannten Bedingungen eine Minimierung oder Eliminierung von Makroblasen aus der gemischten Flüssigkeit umfassen, und die weitegehend an Makroblasen freie Lösung einem hydraulischen Druck unterworfen wird, der wirksam ist, um die Lösung der enthaltenen Mikroblasen vor Einbringen der gemischten Flüssigkeit in das Klärbecken zu erhöhen.

2. Verfahren nach Anspruch 1, bei dem die gemischte Flüssigkeit NOX enthält.

3. Verfahren nach Anspruch 1, bei dem die belüftete gemischte Flüssigkeit während des Transfers von der Belüftung zur Klärung in einem zur Atmosphäre hin offenen Abwasserbassin belassen wird, wobei das Bassin eine derartige Fläche und Tiefe aufweist, daß die Rate für die Abwärtsströmung der gemischten Flüssigkeit von der Rate für die Aufwärtsströmung der enthaltenen Makroblasen überstiegen wird, wobei derartige Makroblasen eliminiert werden, bevor die gemischte Flüssigkeit einem hydraulischen Druck unterworfen wird.

4. Verfahren nach Anspruch 3, bei dem der hydraulische Druck der ist, der von der Entnahme der gemischten Flüssigkeit vom Boden des Bassins durch eine abwärts sich erstreckende Leitung resultiert, die vom Bassin führt und in das Klärbecken entlädt.

5. Verfahren nach Anspruch 3, bei dem die Fläche des Abwasserbassins so ist, daß die Abstiegsrate der gemischten Flüssigkeit darin geringer ist als 0,4 feet (0,122 m) pro Sekunde und die Flüssigkeitstiefe im Bassin größer als 4 feet (1,22 m) über dem Einlaß zu der Leiting ist, durch die die enthaltene Flüssigkeit aus dem Bassin abgeführt wird.

6. Verfahren nach Anspruch 5, bei dem die Flüssigkeitstiefe im Abwasserbecken wenigstens etwa 10 feet (3,05 m) beträgt.

7. Verfahren nach Anspruch 2, bei dem die Konzentration der Blasen auf weniger als etwa 0,7 Vol.-% vermindert wird, bevor die Flüssigkeit hydraulischem Druck unterworfen wird, und wobei ein derartiger nachfolgender hydraulischer Druck unter Bedingungen steht, die etwa 1,5 bar (7,3 psig) für wenigstens 15 Sekunden entsprechen.

8. Verfahren nach Anspruch 2, bei dem die Konzentration der Blasen auf wenigers als etwa 0,3 Vol.-% vermindert wird, bevor die Flüssigkeit hydraulischen Druck unterworfen wird, und wobei derartiger nachfolgender hydraulischer Druck unter Bedingungen steht, die etwa 1,5 bar (7,3 psig) für wenigstens 15 Sekunden entsprechen.

9. Verfahren nach Anspruch 8, bei dem die gemischte Flüssigkeit NOX enthält.

10. Verfahren nach Anspruch 2, bei dem der Gehalt an Makroblasen in der belüfteten gemischten Flüssigkeit minimiert oder eliminiert wird durch Entgasen der Makroblasen in einem zur Atmosphäre offenen Kanal, wobei der Kanal in ein Abwasserbecken entlädt und Bedingungen während der Abgabe der gemischten Flüssigkeit aus diesem Kanal zum Becken aufrechterhalten werden, derartig, daß ein Wiedereintritt von Luft in die gemischte Flüssigkeit vermieden wird und eine Verweilzeit der Flüssigkeit im Kanal von wenigstens 1 Minuten aufrechterhalten wird.

11. Verfahren nach Anspruch 10, bei der die Bedingungen, unter denen die gemischte Flüssigkeit aus dem Kanal zum Bassin abgeleitet wird, eine kontrollierte vertikale Fallhöhe der von weniger als etwa 45,72 cm (18 inches) umfassen.

12. Verfahren nach Anspruch 11, bei dem die senkrechte Fallhöhe weniger als etwa 15,24 cm (6 inches) , beträgt.

13. Verfahren nach Anspruch 11, bei dem die Steuerung der senkrechten Fallhöhe durch Einstellen des Flüssigkeitspegels im Abwasserbecken bewirkt wird.

14. Verfahren nach Anspruch 13, bei dem die Einstellung des Pegels bewirkt wird durch Kontrolle der Abflußrate der Flüssigkeit vom Boden des Bassins durch strömungsbegrenzende Einrichtungen, die automatisch auf Pegelfühler im Bassin reagieren.

15. Verfahren nach Anspruch 2, bei dem die Minimierung oder Eliminierung der Makroblasen durch Entgasen der Makroblasen in einem zur Atmosphäre hin offenen Kanal bewirkt wird, wobei der Kanal in ein Abflußbassin durch eine gesteuerte senkrechte Fallhöhe von weniger als etwa 45,72 cm (18 inches) entlädt, das Bassin eine derartige Größe und Tiefe aufweist, daß die Rate für die Abwärtsströmung der gemischten Flüssigkeit gegen einen Abflußauslaß durch die Aufstiegsrate der enthaltenen Makroblasen übertroffen wird.

16. Verfahren nach Anspruch 15, bei dem die gemischte Flüssigkeit Nitrate und/oder Nitrite enthält.

17. Verfahren nach Anspruch 15, bei dem die Verweilzeit der strömenden gemischten Flüssigkeit im Kanal wenigstens 1 Minute beträgt.

18. Transfereinrichtungen in einem aktivierten Schlammsystem für die Behandlung von Abwasser mit einer Belüftungszone zur Oxidation von gemischter Flüssigkeit, umfassend Abwasser und rückgeführten Schlamm, zum Überführen der belüfteten gemischten Flüssigkeit aus der Belüftungszone zu einem Klärbecken, in dem der Schlamm abgesetzt ist, wobei die Transfereinrichtungen einen offenen Kanal, der gemischte Flüssigkeit aus der Belüftungszone, ein Abwasserbecken in das der Kanal entleert, ein Überführungsrohr, das vom Boden des Beckens sich abwärts, anschließend seitwärts und aufwärts durch den Boden des Klärbeckens erstreckt und gemischte Flüssigkeit in das Klärbecken abgibt, umfassen, dadurch gekennzeichnet, daß die Fläche und die Tiefe des Beckens über dem Einlaß des Transferrohres derart dimensioniert ist, daß die Abstiegsrate der gemischten Flüssigkeit darin geringer als 0,122 m (0,4 feet) pro Sekunde und die Tiefe der Flüssigkeit im Becken größer als 1,22 m (4 feet) ist, wodurch ein Entgasen der eingedrungenen Gasblasen aus der gemischten Flüssigkeit vor ihrem Abfließen in das Rohr ermöglicht wird.

19. Verfahren nach Anspruch 18, bei dem die gemischte Flüssigkeit NOX enthält.

20. Einrichtung nach Anspruch 18, bei der die Tiefe der Flüssigkeit im Becken wenigstens etwa 3,05 m (10 feet) beträgt.

## Revendications

1. Procédé pour la mise en oeuvre d'un système avec boue activée destinée au traitement des eaux usées, dans lequel la liqueur mixte comprenant les eaux usées aérées et la biomasse formant la boue est dirigée vers un clarificateur pour décantation de la boue et dans lequel la montée de la boue décantée dans le clarificateur est inhibée en soumettant la liqueur mixte, avant sont admission dans le clarificateur, à des conditions telles que la concentration en azote dissous n'y dépasse pas celle en équilibre avec l'azote à la pression régnant dans la biomasse en décantation et dans la couche de biomasse dans le clarificateur, caractérisé en ce que les conditions mentionnées comprenent la réduction ou l'élimination des macrobulles dans la liqueur mixte et la soumission de la liqueur substantiellement exempte de macrobulles à une pression hydraulique efficace pour promouvoir la dissolution des microbulles contenues, avant l'introduction de la liqueur mixte dans le clarificateur.

2. Procédé suivant la revendication 1, dans lequel la liqueur mixte contient des NOX.

3. Procédé suivant la revendication 1, dans lequel la liqueur mixte aérée durant le transfert depuis l'aération jusqu'à la clarification est maintenue dans un bassin pour effluent ouvert à l'atmosphère, ce bassin ayant une surface et une profondeur telles que la vitesse de descente de la liqueur mixte soit inférieure à la vitesse ascensionnelle de montée des macrobulles contenues, éliminant ainsi ces macrobulles avant soumission de la liqueur mixte à une compression hydraulique.

4. Procédé suivant la revendication 3, dans lequel la pression hydraulique résulte de l'évacuation de la liqueur mixte du fond du bassin par une conduit dirigée vers le bas, évacuant hors du bassin et déchargeant dans le clarificateur.

5. Procédé suivant la revendication 3, dans lequel la surface du bassin pour effluent est telle que la vitesse de descente de la liqueur mixte y est inférieure à 0,122 m (0,4 pied) par seconde et la hauteur du liquide dans le bassin est supérieure à 1,22 m (4 pieds) au-dessus de l'entrée de la conduite par laquelle la liqueur contenue est évacuée hors du bassin.

6. Procédé suivant la revendication 5, dans lequel la hauteur du liquide dans le bassin pour effluent est d'au moins environ 3,05 m (10 pieds).

7. Procédé suivant la revendication 2, dans lequel la concentration en bulles est réduite jusqu'à moins d'environ 0,7 volume pour cent avant de soumettre la liqueur à compression hydraulique et dans lequel la compression hydraulique ultérieure répond à des conditions correspondant à environ 1,5 bar (7,3 psig) durant au moins 15 secondes.

8. Procédé suivant la revendication 2, dans lequel la concentration en bulles est réduite jusqu'à moins d'environ 0,3 volume pour cent avant de soumettre la liqueur à compression hydraulique, et dans lequel la compression hydraulique ultérieure répond à des conditions correspondant à environ 1,5 bar (7,3 psig) durant au moins 15 secondes.

9. Procédé suivant la revendication 8, dans lequel la liqueur mixte contient des NOX.

10. Procédé suivant la revendication 2, dans lequel la teneur en macrobulles dans la liqueur mixte aérée est réduite ou éliminée en permettant le dégazage des macrobulles dans un chenal ouvert à l'atmosphère, ce chenal déchargeant dans un bassin pour effluent, en maintenant des conditions durant la décharge de la liqueur mixte du chenal dans le bassin de manière à éviter le ré-entraînement d'air dans la liqueur mixte et en maintenant un temps de séjour de la liqueur dans ce chenal d'au moins une minute.

11. Procédé suivant la revendication 10, dans lequel les conditions sous lesquelles la liqueur mixte est déchargée du chenal dans le bassin comprennent une chute verticale contrôlée de moins d'environ 45,72 cm (18 pouces).

12. Procédé suivant la revendication 11, dans lequel la chute verticale est inférieure à environ 15,24 cm (6 pouces).

13. Procédé suivant la revendication 11, dans lequel le contrôle de la hauteur de la chute verticale est effectué en ajustant le niveau du liquide dans le bassin pour effluent.

14. Procédé suivant la revendication 13, dans lequel l'ajustement du niveau est effectué en contrôlant la vitesse de décharge du liquide à partir du fond du bassin au moyen de dispositifs de la limitation du débit répondant automatiquement à des dispositifs de détection de niveau dans le bassin.

15. Procédé suivant la revendication 2, dans lequel la réduction ou l'élimination des macrobulles est effectuée en permettant aux macrobulles de se dégazer dans un chenal ouvert à l'atmosphère, ce chenal déchargeant dans un bassin pour effluent par une chute verticale contrôlée inférieure à environ 45,72 cm (18 pouches), le bassin ayant une surface et une profondeur telles que la vitesse d'écoulement vers le bas de la liqueur mixte vers l'orifice de décharge soit inférieure à la vitesse ascensionnelle de montée des macrobulles contenues.

16. Procédé suivant la revendication 15, dans lequel la liqueur mixte contient des nitrates et/ou des nitrites.

17. Procédé suivant la revendication 15, dans lequel le temps de séjour de la liqueur mixte s'écoulant dans le chenal est d'au moins une minute.

18. Dispositifs de transfert dans un système avec boue activée pour le traitement des eaux usées ayant une zone d'aération pour oxydation de la liqueur mixte comprenant des eaux usées et de la boue recyclée, pour transférer la liqueur mixte aérée depuis la zone d'aération jusqu'à un clarificateur dans lequel la boue décante, ces dispositifs de transfert comportant un chenal ouvert recevant la liqueur mixte de la zone d'aération, un puits pour effluent dans lequel décharge le chenal, une conduite de transfert dirigée vers le bas à partir du fond du puits ensuite latéralement puis vers le haut à travers le fond du clarificateur et déchargeant la liqueur mixte dans le clarificateur, l'amélioration consistant en ce qu'on fixe les dimensions de la surface et de la profondeur du puits au-dessus de l'entrée de la conduite de transfert du manière telle que la vitesse de descente de la liqueur mixte y soit inférieure à 0,122 m (0,4 pied) par seconde et que la hauteur de la liqueur dans le puits soit supérieure à 1,22 m (4 pieds), ce qui permet le dégazage des bulles de gas entraînées hors de la liqueur mixte avant sa décharge dans la conduite.

19. Procédé suivant la revendication 18, dans lequel la liqueur mixte contient des NOX.

20. L'amélioration suivant la revendication 18, dans laquelle la hauteur de la liqueur dans le puits est d'environ au moins 3,05 m (10 pieds).

EP 0 138 118 B1

## FIG. 1

PRIOR ART

## FIG. 2

1

FIG. 3

FIG. 4

AIR/WATER SYSTEM

BUBBLE RISE VELOCITY (FT./SEC.)

BUBBLE DIAMETER (INCHES)